# FASCICULE DE BREVET EUROPEEN

(11) **EP 0 774 295 B1**
(45) Date de publication et mention de la délivrance du brevet: **26.09.2001**
(21) Numéro de dépôt: 96402433.5
(22) Date de dépôt: 14.11.1996
(51) Int. Cl.: B01J 19/32, B01J 20/28, B01D 53/04

(54) **Bloc de garnissage à pouvoir élevé d'adsorption pour dispositif d'épuration d'effluents gazeux**
Füllkörper mit hoher Adsorptionsfähigkeit für Abgasreinigungsvorrichtung
Packing element with high adsorption capacity for effluent gas purification device

(30) Priorité: 17.11.1995 FR 9513763
(43) Date de publication de la demande: 21.05.1997
(73) Titulaire: INSTITUT FRANCAIS DU PETROLE, 92852 Rueil-Malmaison Cedex (FR); Bourcier, Jacques, 44600 Saint-Nazaire (FR)
(72) Inventeur: Morlec, Jean, 44600 Saint-Nazaire (FR); Bourcier, Jacques, 44600 Saint-Nazaire (FR)

(56) Documents cités:
- EP-A- 0 367 717
- EP-A- 0 628 346
- DE-A- 4 313 976
- DE-B- 1 253 673
- FR-A- 2 120 879
- US-A- 5 143 658
- US-A- 5 348 922

## Description

La présente invention concerne un dispositif à structure adsorbante qui peut être interposée dans une circulation d'effluents gazeux dans le but de retenir des substances polluantes qui y sont mêlées.

Le procédé et le dispositif selon l'invention trouvent des applications notamment pour l'épuration d'effluents gazeux contenant des composés organiques volatils, ci-après désignés par COV, des substances malodorantes ou de l'eau. Sous le terme générique de COV, on range les hydrocarbures, les composés chlorés, fluorés et chloro-florés, les NOx, les SOx, H2S et mercaptans, NH3 et amines et, d'une façon générale, tous les composés organiques et minéraux qui peuvent être présents dans l'air à des concentrations gênantes à divers titres.

Par le brevet FR-A-2 738 501 des demandeurs, on connait un dispositf pour éliminer des substances polluantes mêlées à des effluents gazeux. Les effluents à épurer passent au travers d'une barrière comportant une batterie d'unités d'épuration juxtaposées dans une enceinte, contenant chacune des matériaux adsorbants tels que du charbon actif par exemple ou des zéolites. Pour restituer leur capacité d'épuration aux unités d'épuration, on les isole sélectivement et successivement au moyen d'un collecteur mobile quand leur charge adsorbante est saturée, le temps nécessaire à leur désorption par chauffage, et au transfert des substances par un fluide auxiliaire (une fraction des effluents en circulation par exemple ou un gaz amené sélectivement à l'entrée de l'unité d'épuration à désorber par un circuit auxiliaire), et éventuellement on transfère les substances mêlées au fluide auxiliaire vers un réacteur adapté à les éliminer.

Chaque unité d'épuration comporte par exemple plusieurs compartiments plats disposés parallèlement ou en accordéon entre les faces antérieure et postérieure de la barrière d'épuration, avec un espacement entre eux. Chacun des compartiments est délimité latéralement par des tôles perforées et rempli d'un matériau adsorbant tel que du charbon actif par exemple. Certaines entrées et sorties sur la face antérieure et postérieure, sont fermées de façon à allonger le trajet des effluents et augmenter ainsi leur surface de contact avec l'adsorbant. Cette déviation des flux peut être obtenue aussi par des tôles déflectrices disposées en biais entre les différents compartiments ou bien en disposant les compartiments plats en zigzag de façon à contraindre l'effluent de les traverser.

Il est connu de constituer des colonnes pour des échanges de chaleur ou de masse entre des fluides ou pour le filtrage, avec des garnitures multi-canaux. De telles garnitures peuvent être réalisées à base de structures en nid d'abeille ou être constituées par empilement ou juxtaposition de feuilles ou plaques à structure périodique (ondulations, déformations de forme diverses) qui délimitent des canaux où l'on fait circuler des fluides. Des matériaux adsorbants peuvent être placés dans les canaux de la garniture dans le but de purifier des fluides.

Des garnitures pour colonnes avec éventuellement des matériaux adsorbants, sont décrites par exemple dans les brevets EP-229.199 (US-4.675.103) US-4.532.086, EP-117.949 (US-4.541.967), US-4.744.928, US-4.744.928, EP-640.385, US-4.762.536 ou US-4.830.792.

Dans toute la suite du texte, on utilisera l'expression "plaque ondulée" pour désigner généralement toute plaque pourvue de déformations longitudinales périodiques parallèles les unes aux autres (avec un direction d'allongement commune).

Le bloc de garnissage selon l'invention, tel que defini dans la revendication independante 1, est adapté à l'adsorption de substances polluantes mêlées à une circulation d'effluents gazeux. Il comporte au moins un bloc réalisé par empilement alternativement de plaques minces ondulées avec une première direction d'allongement, et de plaques minces ondulées avec une deuxième direction d'allongement différente de la première, Les ondulations délimitant deux réseaux de canaux non parallèles.

Il est caractérisé en ce que les deux réseaux communiquent l'un avec l'autre au travers de feuilles réalisées à partir d'un matériau adsorbant les substances polluantes, interposées entre les différentes plaques minces de cet empilement, le bloc étant disposé dans un courant d'effluents de façon que les effluents le traversent en profondeur en circulant de façon aléatoire entre les deux réseaux de canaux et en restant en contact avec les feuilles adsorbantes.

Suivant un mode de réalisation facilitant la désorption périodique du bloc, par action thermique à contre-courant des flux à dépolluer, les plaques minces ondulées sont réalisées à partir d'un matériau capable de réfléchir les rayons infra-rouges, et le matériau adsorbant est choisi pour son pouvoir d'absorption élevé des rayons infra-rouges.

Suivant les cas, ces plaques minces ondulées peuvent être réalisées par exemple en métal présentant des discontinuités ou aspérités : feuilles métalliques trouées, estampées, gaufrées, toiles métalliques etc., de façon à créer des turbulences favorisant le contact des effluents avec les feuilles de matériau adsorbant.

Les feuilles adsorbantes peuvent être réalisées à partir d'une ou plusieurs couches de tissu de carbone activé (T.C.A.) ou de tissu de fibres de verre revêtues d'une substance adsorbante telle que des zéolites hydrophiles ou hydrophobes selon les cas. ou encore de non-tissés tels que des feutres par exemple.

Avec un bloc de garnissage ainsi conçu, les effluents traversent le bloc de garnissage en suivant les canaux délimités par les plis des plaques et restent en contact intime avec les feuilles adsorbantes. La désorption obtenue est très efficace sans qu'il en résulte pourtant une perte de charge élevée.

D'autres caractéristiques et avantages du bloc de garnissage selon l'invention, apparaîtront à la lecture de la description ci-après de modes de réalisation décrits à titre d'exemples non limitatifs, en se référant aux dessins annexés où :
- la Fig.1 montre schématiquement en coupe un empilement de plaques ondulées et de feuilles adsorbantes;
- la Fig.2 est une vue de dessus de plaques ondulées superposées avec des directions d'allongement symétriques par rapport à un axe X0, de part et d'autre d'une feuille adsorbante; et
- la Fig.3 montre schématiquement un bloc de garnissage réalisé par empilement des plaques et des feuilles d'adsorbant.

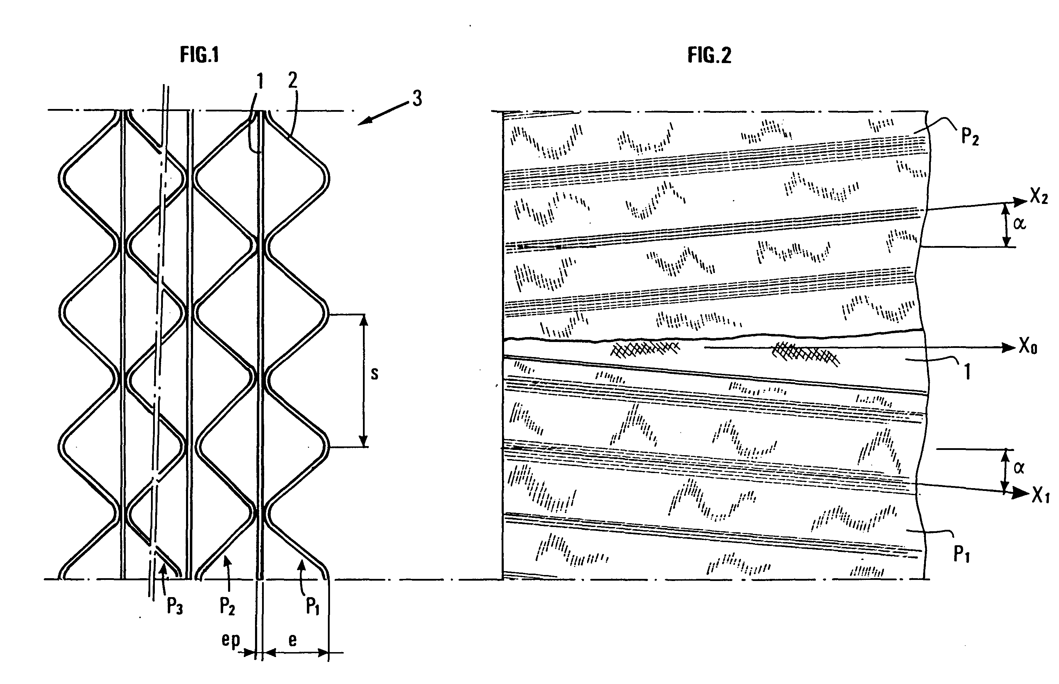

Comme le montre les Fig.1, 2, on utilise pour réaliser le bloc par l'empilement des plaques minces P1, P2, P3, P4 etc., pourvues de déformations longitudinales périodiques parallèles les unes aux autres telles que des ondulations. Pour un premier jeu de plaques ondulées (les plaques impaires P1, P3 etc. par exemple) la direction d'allongement des ondulations est X1. La direction d'allongement X2 des ondulations du jeu de plaques complémentaire (plaques paires P2, P4 etc.) fait un angle 2α avec la direction X1. L'angle α peut varier par exemple entre 5° et 45°par exemple. L'inclinaison des plaques successives de l'empilement les unes par rapport aux autres, a pour effet qu'elles sont en contact par leurs sommets ou arêtes sans risque d'emboitement.

Entre toutes les plaques (P1, P2), (P2, P3), (P3, P4) etc, sont interposées des feuilles 1 réalisées soit à partir d'un matériau choisi pour adsorber les substances polluantes dans les effluents à traiter, ou bien d'un substrat sur lequel est rapporté une substance adsorbante. Chaque feuille 1 délimite avec chacune des ondulations adjacentes un conduit de forme triangulaire 2. Ces feuilles adsorbantes sont réalisées de préférence dans des matériaux capables de résister aux températures élevées (quelques centaines de °C) nécessaires à leur désorption thermique.

Par un tel empilement de plaques ondulées P avec interposition de feuilles 1 à pouvoir d'adsorption, on constitue (Fig.2) un bloc ou garniture 3 qui peut être utilisé par exemple dans les unités d'épuration du dispositif de la demande de brevet précitée EN. 95/10591. Le bloc 3 est positionné par exemple de façon que les directions X1, X2 des canaux de part et d'autre des feuilles adsorbantes 1, soient symétriques l'une de l'autre par rapport à la direction principale X0 d'un flux d'effluents à épurer. Avec cette disposition, la longueur des circuits parcourus par les effluents le long des conduits 2, est augmentée.

Les feuilles 1 à pouvoir d'adsorption peuvent être par exemple des tissus en carbone activé (T.C.A) et comporter une ou plusieurs couches, ou bien des tissus de fibres de verre revêtus de zéolites hydrophobes. On peut les réaliser également à base de feutre ou de tout autre matériau non tissé adsorbant dans toute sa masse ou éventuellement par son revêtement.

Les plaques minces ondulées P sont des feuilles en métal ou en polymères capables de résister aux températures nécessaires à la désorption périodique de l'adsorbant. Ces plaques sont pourvues d'irrégularités de relief, d'aspérités ou de discontinuités dans le but notamment de créer des écoulements turbulents d'effluents le long des conduits 2 et améliorer leur contact avec les feuilles 1 avec pour conséquence une meilleure adsorption des substances polluantes. Cet effet est obtenu avec des plaques avec une fine répartition de trous, des plaques embouties ou estampées, ou encore des plaques faites d'une toile plissée.

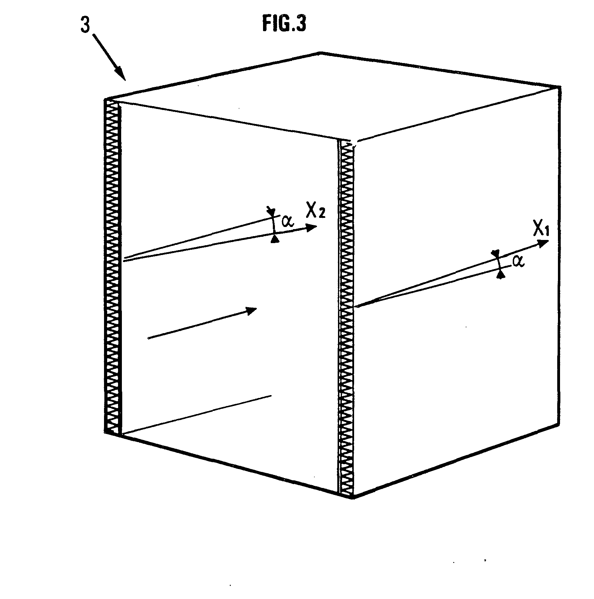

On peut réaliser des blocs (Fig.3) avec des feuilles adsorbantes en tissu de carbone activé (T.C.A.) avec une épaisseur ep, disposées entre des plaques ondulées ou plissées avec un pas s, des épaisseurs de plis e entre les plis, dans les dimensions suivantes :
2² e² 6mm
10² s² 20mm
0,5² ep² 3mm ;
et réaliser ainsi des blocs où la masse de tissu de carbone activé (T.C.A.) est comprise entre 50 et 150 Kg au m3, par exemple.

Si l'on utilise des plaques P réalisées en un matériau refléchissant les ondes infra-rouges, et des feuilles 1 en une substance avec un bon pouvoir d'absorption de ces ondes (c'est le cas par exemple des tissus en carbone activé), on peut pratiquer une désorption thermique dite à contre-courant. En aval de chaque bloc d'épuration, comme décrit dans la demande de brevet précitée, on dispose un réacteur émettant des ondes infra-rouges qui se propagent bien vers l'amont le long des différents conduits 2 sans être contrariées par les flux d'effluents dirigés en sens inverse.

On a décrit un bloc de garnissage dans une application à l'épuration d'effluents gazeux. On ne sortirait pas du cadre de l'invention toutefois en l'utilisant dans une autre application. Un tel bloc peut servir par exemple aussi à la deshumidification de l'air dans des applications aux industries agricoles : séchage des grains etc, et dans ce cas, les feuilles adsorbantes sont réalisées par exemple à base de zéolites hydrophiles ou de tout autre substance adaptée à l'adsorption de l'eau, notamment d'alumine.

## Revendications

1. Bloc de garnissage pour un dispositif d'épuration adapté à l'adsorption de substances polluantes mêlées à une circulation d'effluents gazeux, réalisé par empilement alternativement de plaques minces ondulées (P1, P3) avec une première direction d'allongement (X1), et de plaque minces ondulées avec une deuxième direction d'allongement (X2) différente de la première, les ondulations délimitant deux réseaux de canaux non parallèles, des feuilles (1) réalisées à partir de matériaux perméables aux effluents et capables d'adsorber les substances polluantes, ces feuilles (1) étant interposées entre les différentes plaques minces ondulées (P) de cet empilement, **caractérisé en ce que** les dites plaques ondulées (P) sont réalisées en métal ou dans un polymère résistant à des températures nécessaires à la désorption des dites feuilles et présentent des irrégularités ou aspérités ou discontinuités destinées à créer des écoulements turbulents du gaz le long des ondulations.

2. Bloc de garnissage selon la revendication 1, **caractérisé en ce que** les plaques minces ondulées (P) sont réalisées à partir de toiles de métal ou de polymère.

3. Bloc de garnissage selon la revendication 1, **caractérisé en ce que** les plaques minces ondulées (P) présentent une fine répartition de trous permettant la circulation des effluents gazeux par les deux réseaux de canaux au travers du bloc de garnissage.

4. Bloc de garnissage selon l'une des revendications 1 à 3, **caractérisé en ce que** les plaques en métal ou en polymère sont réalisées par emboutissage ou estampage.

5. Bloc de garnissage selon l'une des revendications précédentes, **caractérisé en ce que** les feuilles (1) sont réalisées dans un matériau adsorbant choisi pour absorber les rayons infra-rouges.

6. Bloc de garnissage selon l'une des revendications précédentes, **caractérisé en ce que** les feuilles (1) comportent au moins une couche d'un tissu en carbone activé (TCA).

7. Bloc de garnissage selon l'une des revendications 1 à 5, **caractérisé en ce que** les feuilles (1) comportent au moins une couche d'un tissu de fibres de verre revêtue des zéolites hydrophobes.

8. Bloc de garnissage selon l'une des revendications 1 à 5, **caractérisé en ce que** les feuilles (1) comportent au moins une couche d'un tissu de fibres de verre revêtues de zéolites hydrophiles.

9. Bloc de garnissage selon l'une des revendications 1 à 5, **caractérisé en ce que** les feuilles (1) comportent au moins une couche d'une substance non tissée tel que du feutre.

## Claims

1. Packing element for a purification device adapted for adsorption of polluting substances mixed with circulating gaseous effluents, made by alternately stacking thin undulating plates (P1, P3) with a first direction of extension (X1) and thin undulating plates with a second direction of extension (X2) different from the first, the undulations delimiting two systems of channels which are not parallel, and sheets (1) made from materials permeable to the effluents and capable of adsorbing the polluting substances, these sheets (1) being interposed between the different thin undulating plates (P) of this stack, **characterised in that** said undulating plates (P) are made of metal or of a polymer resistant to temperatures necessary for desorption from said sheets and exhibit irregularities or roughness or discontinuities designed to create turbulent flow in the gas along the undulations.

2. Packing element according to claim 1, **characterised in that** the thin undulating plates (P) are made from metal or polymer gauzes.

3. Packing element according to claim 1, **characterised in that** the thin undulating plates (P) exhibit a fine distribution of holes allowing the circulation of the gaseous effluents through the two systems of channels through the packing element.

4. Packing element according to one of claims 1 to 3, **characterised in that** the metal or polymer plates are made by pressing or stamping.

5. Packing element according to one of the preceding claims, **characterised in that** the sheets (1) are made of an adsorbent material chosen to absorb infrared radiation.

6. Packing element according to one of the preceding claims, **characterised in that** the sheets (1) comprise at least one layer of an activated carbon fabric (TCA).

7. Packing element according to one of claims 1 to 5, **characterised in that** the sheets (1) comprise at least one layer of a glass fibre fabric covered with hydrophobic zeolites.

8. Packing element according to one of claims 1 to 5, **characterised in that** the sheets (1) comprise at least one layer of a carbon fibre fabric covered with hydrophilic zeolites.

9. Packing element according to one of claims 1 to 5, **characterised in that** the sheets (1) comprise at least one layer of a non-woven substance such as felt.

## Patentansprüche

1. Füllkörperblock für eine Reinigungsvorrichtung, ausgelegt für die Adsorption von zu einem Umlauf gasförmiger Abströme zugemischten verschmutzenden Substanzen, der verwirklicht ist durch alternatives Stapeln von dünnen gewellten Platten (P1, P3) mit einer ersten Längsrichtung (X1) und dünnen gewellten Platten mit einer zweiten Längsrichtung (X2), die von der ersten verschieden ist, wobei die Wellungen zwei Netzwerke von nicht parallelen Kanälen begrenzen, Folienblätter (1), die ausgehend von Materialien verwirklicht sind, die für die Abströme permeabel sind und in der Lage sind, die verschmutzenden Substanzen zu adsorbieren, wobei diese Folienblätter (1) zwischen die verschiedenen dünnen gewellten Platten (P) dieser Stapelung zwischengeschaltet sind, **dadurch gekennzeichnet, dass** diese gewellten Platten (P) aus Metall oder in einem Polymer verwirklicht sind, dass gegen die für die Desorption dieser Folienblätter nötigen Temperaturen resistent ist, und die Unregelmäßigkeiten oder Unebenheiten oder Unterbrechungen aufweisen, die darauf ausgerichtet sind, turbulente Strömungen des Gases entlang der Wellungen zu erzeugen.

2. Füllkörperblock nach Anspruch 1, **dadurch gekennzeichnet, dass** die dünnen gewellten Platten (P) ausgehend von Geweben aus Metall oder Polymer verwirklicht sind.

3. Füllkörperblock nach Anspruch 1, **dadurch gekennzeichnet, dass** die gewellten dünnen Platten (P) eine Feinverteilung von Löchern aufweisen, die die Zirkulation der gasförmigen Abströme durch die beiden Netzwerke von Kanälen entlang des Füllkörperblocks ermöglichen.

4. Füllkörperblock nach einem der Ansprüche 1 bis 3, **dadurch gekennzeichnet, dass** die Platten aus Metall oder Polymer durch Ziehen oder Pressen verwirklicht sind.

5. Füllkörperblock nach einem der vorhergehenden Ansprüche, **dadurch gekennzeichnet, dass** die Folienblätter (1) aus einem adsorbierenden Material verwirklicht sind, das gewählt ist, um Infrarotstrahlen zu absorbieren.

6. Füllkörperblock nach einem der vorhergehenden Ansprüche, **dadurch gekennzeichnet, dass** die Folienblätter (1) wenigstens eine Lage eines Gewebes aus Aktivkohle (TCA) umfassen.

7. Füllkörperblock nach einem der Ansprüche 1 bis 5, **dadurch gekennzeichnet, dass** die Folienblätter (1) wenigstens eine Lage eines Gewebes von mit hydrophoben Zeolithen überzogenen Glasfasern umfassen.

8. Füllkörperblock nach einem der Ansprüche 1 bis 5, **dadurch gekennzeichnet, dass** die Folienblätter (1) wenigstens eine Lage eines Gewebes von mit hydrophilen Zeolithen überzogenen Glasfasern umfassen.

9. Füllkörperblock nach einem der Ansprüche 1 bis 5, **dadurch gekennzeichnet, dass** die Folienblätter (1) wenigstens eine Lage einer nichtgewebten Substanz wie Filz umfassen.
